# EUROPÄISCHE PATENTSCHRIFT

(11) **EP 0 697 277 B1**
(45) Veröffentlichungstag und Bekanntmachung des Hinweises auf die Patenterteilung: **02.08.2000**
(21) Anmeldenummer: 95105224.0
(22) Anmeldetag: 07.04.1995
(51) Int. Cl.: C08L 95/00, C09D 195/00, B32B 1/08, B05D 7/14

(54) **Wärme und Schall reduzierende Beschichtung**
Heat and sound reducing coating
Revêtement pour la réduction thermique et acoustique

(30) Priorität: 05.07.1994 DE 4423479
(43) Veröffentlichungstag der Anmeldung: 21.02.1996
(73) Patentinhaber: CWW-GERKO Akustik GmbH & Co. KG, 60388 Frankfurt (DE)
(72) Erfinder: Bildner, Karlheinz, D-63589 Linsengericht (DE); Hardt, Christian, D-64451 Kelsterbach (DE)
(74) Vertreter: Schlagwein, Udo, Dipl.-Ing.

(56) Entgegenhaltungen:
- EP-A- 0 617 098
- DE-A- 3 209 151
- DE-A- 3 932 033
- DE-A- 4 029 729

## Beschreibung

Die Erfindung betrifft Wärme und Schall reduzierende Beschichtungen für Bleche, die vorwiegend für entsprechende Dämmaßnahmen bei Fahrzeugen und Maschinen Verwendung finden.

DE-A-3 932 033 beschreibt Beschichtungen von Karosserieblechen.

Aus einer älteren Anmeldung der Anmelderin (Aktenzeichen der deutschen Patentanmeldung: P 44 09 125.7) ist eine heißspritzbare Antidröhnmasse auf Basis von Bitumen, Polymeren und/oder Wachs bekannt, die in einem weiten Temperaturbereich gut akustisch dämpfend wirkt.

Diese Masse ist thermoplastisch und hat keine nennenswerte Wärme reduzierenden Eigenschaften. Im Gegenteil, entsprechende Beschichtungen, die stärker Wärmeeinwirkung ausgesetzt sind, wie etwa im Bereich des Katalysators beim Unterbodenschutz von Automobilen, werden weich, und verlieren in diesem Bereich ihre akustische Eigenschaft.

Es ist daher Aufgabe der Erfindung, Beschichtungen für Bleche bereitzustellen, die über einen weiten Temperaturbereich gute akustische Dämpfungen zeigen, die aber zusätzlich eine Wärme reduzierende Wirkung zeigen und die bei einer Wärmeeinwirkung, wie sie etwa der des Katalysators beim fahrenden Automobil darstellt, ihre akustische Wirksamkeit behalten und nicht zerstört werden.

Die Lösung der Aufgabe erfolgt durch Beschichtungen gemäß der Ansprüche 1-7 sowie durch Verfahren zu ihrer Herstellung gemäß der Ansprüche 8-10.

Es wurde gefunden, daß das Problem der Wärmeeinwirkung auf die Antidröhnbeschichtung im Bereich des Katalysators beim fahrenden Auto dadurch gelöst werden kann, daß auf die Beschichtung in diesem Bereich eine Metallfolie aufgebracht wird. Die Wärme abstrahlende und ableitende Wirkung einer dünnen Metallfolie ist ausreichend, um die darunterliegende thermoplastische Beschichtung zu schützen.

Wird zur Antidröhnbeschichtung eine Antidröhnmasse gemäß der Anmeldung P 44 09 125.7 verwendet, so wird nach dem Aufbringen der Metallfolie überraschenderweise eine enorme Verbesserung der schalldämmenden Wirkung erzielt.

Wie das Vergleichsbeispiel zeigt, konnte eine gewisse Verbesserung auch bei der Metallkaschierung einer herkömmlichen Bitumenfolie erzielt werden. Daß aber bei der erfindungsgemäßen Beschichtung in einfacher Weise Verlustfaktoren von über 0,5 erzielt werden, wird vom Fachmann als sensationell angesehen.

Die erfindungsgemäße Beschichtung für Bleche enthält somit als wesentliche Komponenten eine Schicht aus einer lösemittelfreien Masse auf Basis von Bitumen, Polymeren und/oder Wachs, die Füllstoffe enthält, deren Teilchengröße nicht größer ist als 200 µm, wobei sie als Füllstoffe Aluminium- oder Zinkpulver sowie Graphit- oder Glimmerpulver oder Graphit- und Glimmerpulver enthält und eine Metallfolie auf ihrer Außenseite. Die Schicht aus der lösemittelfreien Masse hat eine Dicke von 1-10 mm, bevorzugt von 1,5 - 5 mm.

Als Metallfolie kann jede gängige Metallfolie eingesetzt werden. Bevorzugt sind jedoch Folien aus Kupfer oder Aluminium. Diese Folien haben eine Dicke von 0,1-0,3 mm. Sie können direkt mit der Schicht aus lösemittelfreier Masse verbunden sein oder aber mit Hilfe einer zusätzlichen Kleberschicht. Die zur Herstellung der dämpfenden Schicht eingesetzten Massen sind lösemittelfreie, heißspritzbare Massen auf Basis von Bitumen, Polymeren und/oder Wachs, die Füllstoffe enthalten, deren Teilchengröße nicht größer als 200 µm ist und die als Füllstoffe neben ggf. weiteren Füllstoffen Aluminium- und/oder Zinkpulver sowie Graphit- oder Glummerpulver oder Graphit- und Glimmerpulver enthalten.

Die Massen können weitere Füllstoffe enthalten, wie dies z. B. aus Bitumenfolienrezepturen bekannt ist. Beispiele für derartige Füllstoffe sind Gesteinsmehle calcinierte Kaoline, Silikate, Kreide, Dolomit, Kieselsäure, aber auch hochdisperse Kieselsäure, Betonite und Sepiolithe.

Bevorzugt ist die Kombination aus Aluminium- oder Zinkpulver, Graphit und Kreide bzw. Aluminium- oder Zinkpulver und Glimmer sowie ggf. Kreide.

Die geringste Füllstoffmenge der Masse beträgt 18 Gew.-%. Je nach mittlerer Molekulargröße des oder der eingesetzten Bitumina, Polymere oder Wachse, das heißt, je nach der Aufnahmefähigkeit dieser bindenden Stoffe können die Massen bis zu 68 Gew.-% Füllstoffe enthalten. Dabei liegt die Menge des Aluminium- oder Zinkpulvers im Bereich von 1 bis 8 Gew.-%, die des Graphits im Bereich von 10 bis 50 Gew.-%.

Als Bitumen können alle handelsüblichen Typen ebenso wie Gemische verschiedener Typen eingesetzt werden. Bevorzugt sind die folgenden Bitumentypen: Destillationsbitumen B 180 - B 200 oder Blasbitumen 85/40. Die Bitumenmenge liegt im Bereich von 30 bis 50 Gew.-%. Die eingesetzten Bitumina werden mit 2 bis 22 Gew.-%, bezogen auf die Gesamtmasse, eines oder mehrerer Polymere und 0 bis 10 Gew.-%, bezogen auf die Gesamtmasse, eines oder mehrerer Wachse modifiziert.

Einsetzbare Polymere sind polymere Aliphaten, wie z. B. Polyethylen, -propylen oder -butylen, verträgliche Kautschuke, wie z. B. Acryl-, Nitril-, Styrol-Butadien, Styrol-Acryl-, Acryl-Butadien-Kautschuke sowie Klebeharze, wie z. B. aliphatische und aromatische Kohlenwasserstoffharze, Cumaron-Inden-Harze, Vinylharze, wie Polyvinylacetat oder Ethylen-Vinylacetat-Copolymer, insbesondere Polyvinylbutyral aber auch Naturharze, wie z. B. Balsam- oder Kolophoniumharz.

Als Wachse einsetzbar sind alle handelsüblichen Produkte mit einem Schmelzpunkt oberhalb 60 °C und zwar sowohl natürliche, pflanzliche oder tierische Wachse, Mineralwachse oder petrochemische Wachse als auch chemisch modifizierte, sog. Hartwachse und synthetische Wachse, insbesondere Polyalkylen-und Polyethylenglykolwachse.

Wachse und Polymere können mit handelsüblichen Weichmachern, insbesondere foggingarmen Prozeßölen (naphthenischen Ölen) vermischt werden. Somit ergibt sich folgende allgemeine Richtrezeptur der erfindungsgemäßen Massen:

| | |
|---|---|
| Bitumen | 30 bis 50 Gew.-% |
| Polymer(e) | 2 bis 22 Gew.-% |
| Wachs(e) | 0 bis 10 Gew.-% |
| Aluminium- und/oder Zinkpulver | 1 bis 8 Gew.-% |
| Graphit | 10 bis 50 Gew.-% |
| Glimmer | 0 bis 25 Gew.-% |
| weitere Füllstoffe | 0 bis 50 Gew.-% |

Die Einsatzprodukte und ihre jeweiligen Mengen werden so ausgesucht und abgestimmt, daß die Massen bei 140 °C eine Viskosität von 0,1 bis 5,0 Pa^{.}s haben und bei dieser Temperatur mit üblichen Airless-Spritzgeräten gespritzt werden können.

Die Auftragung erfolgt bevorzugt durch Airless-Sprizen, bevorzugt mit Hilfe von Spritz-Robotern in gezielter Dicke und auf exakt vorgegebenen Bereichen.

Die Herstellung der erfindungsgemäßen Beschichtung erfolgt dadurch, daß auf das Blech eine Schicht aus einer lösemittelfreien Masse auf Basis von Bitumen, Polymeren und/oder Wachs, und Füllstoffen, dern Teilchengröße nicht größer ist als 200 µm, wobei sie als Füllstoffe Aluminium- und/oder Zinkpulver sowie Graphit- oder Glimmerpulver oder Graphit- und Glimmerpulver neben ggf. weiteren Füllstoffen enthält, heiß aufgebracht wird und daß dann entweder die Metallfolie auf die heiße Masse aufgebracht wird, oder, daß nach dem Abkühlen der Masse die Metallfolie mit Hilfe eines zusätzlichen Klebers auf die erstarrte Schicht aufgeklebt wird. Bevorzugt wird bei dieser Arbeitsweise eine mit einem üblichen Kleber kaschierte Metallfolie auf die erstarrte Schicht aufgeklebt. Aus ökonomischen Gründen wird nicht die gesamte Fläche des mit der Masse beschichteten Blechs mit Metallfolie versehen sondern nur ausgewählte Bereiche, d.h. Stellen, an denen entweder die wärmedämmende Eigenschaft und/oder eine besonders intensive Gräuschdämpfung, etwa an den Schwingungsknotenpunkten, benötigt werden. Dazu wird vorab die Form der Metallfolie entsprechend zugeschnitten.

### Beispiele

1,0 mm dicke Stahlbleche werden mit verschiedenen Antidröhnmassen beschichtet. Von diesen Blechen werden die Verlustfaktoren bei einer Frequenz von 200 Hz bei verschiedenen Temperaturen gemessen.

Danach wird auf die Beschichtung jeweils eine Aluminiumfolie geklebt und erneut bei einer Frequenz von 200 Hz die Verlustfaktoren bei verschiedenen Temperaturen bestimmt. Die erhaltenen Ergebnisse sind in Tabelle I zusammengefaßt.

Es werden folgende Antidröhnmassen eingesetzt:

| Beispiel 1 | |
|---|---|
| Bitumen B 180 | 40 Gew.-teile |
| Polybuten | 7 Gew.-teile |
| Balsamharz | 5 Gew.-teile |
| Polyethylenglykolwachs | 7 Gew.-teile |
| Aluminiumpulver | 3 Gew.-teile |
| pyrogene Kieselsäure | 3 Gew.-teile |
| Graphit | 19,5 Gew.-teile |
| Kreide | 15,5 Gew.-teile |

Alle Füllstoffe haben eine mittlere Teilchengröße < 30 µm.

| Beispiel 2 | |
|---|---|
| Bitumen B 15 | 21 Gew.-teile |
| Bitumen B 180 | 27 Gew.-teile |
| Polyvinylacetat | 6,1 Gew.-teile |
| Balsamharz | 7,3 Gew.-teile |
| Polyethylenglykolwachs (Tropfst.: 102 °C) | 10,3 Gew.-teile |
| Aluminiumpulver | 3,6 Gew.-teile |
| pyrogene Kieselsäure | 3,5 Gew.-teile |
| Glimmer, naß gemahlen | 16 Gew.-teile |
| Kreide | 5,2 Gew.-teile |

Alle Füllstoffe haben eine mittlere Teilchengröße < 200 µm.

| Beispiel 3 (Vergleichsbeispiel) | |
|---|---|
| Bitumen B 180 | 28 Gew.-teile |
| Prozeßöl | 5,8 Gew.-teile |
| Polyethylenglykolwachs | 3,6 Gew.-teile |
| Balsam-Harz | 3,6 Gew.-teile |
| Glimmer | 5,5 Gew.-teile |
| Schiefermehl | 53,5 Gew.-teile |

**Tabelle I**

| (Verlustfaktoren) | | | |
|---|---|---|---|
| Temperatur [°C] | Masse aus Beispiel 1 Dicke 2,8 mm* | Masse aus Beispiel 2 Dicke 2,8 mm* | Masse aus Beispiel 3 Dicke 2,2 mm* |
| + 60 | 0,05 | 0,05 | |
| + 50 | 0,06 | 0,07 | |
| + 40 | 0,09 | 0,09 | 0,06 |
| + 30 | 0,12 | 0,12 | 0,11 |
| + 20 | 0,13 | 0,15 | 0,13 |
| + 10 | 0,11 | 0,15 | 0,11 |
| + 0 | 0,08 | 0,11 | 0,07 |
| - 10 | 0,05 | 0,06 | 0,05 |
| - 20 | 0,03 | 0,03 | 0,02 |

| Temperatur [°Cl | Masse aus Beispiel 1 Dicke 2,8 mm*Alufolie 0,2 mm | Masse aus Beispiel 2 Dicke 2,8 mm* Alufolie 0,15 mm | Masse aus Beispiel 3 Dicke 2,2 mm* Alufolie 0,15 mm |
|---|---|---|---|
| + 80 | | | 0,18 |
| + 70 | | | 0,183 |
| + 60 | 0,22 | 0,15 | 0,18 |
| + 50 | 0,29 | 0,27 | 0,15 |
| + 40 | 0,50 | 0,52 | 0,125 |
| + 30 | 0,39 | 0,32 | 0,105 |
| + 20 | 0,22 | 0,1 | 0,095 |
| + 10 | 0,14 | 0,09 | 0,08 |
| 0 | 0,08 | 0,07 | 0,06 |
| - 10 | 0,04 | 0,06 | 0,04 |
| - 20 | 0,03 | 0,03 | 0,02 |

| | | | |
|---|---|---|---|
| * Alle Beschichtungen haben ein Flächengewicht von 3 kg/m² | | | |

## Patentansprüche

1. Wärme und Schall reduzierende Beschichtung für Bleche, **dadurch gekennzeichnet,** daß sie als wesentliche Komponenten eine Schicht aus einer lösemittelfreien Masse auf Basis von Bitumen, Polymeren und/oder Wachs und Füllstoffen, deren Teilchengröße nicht größer ist als 200 µm, wobei sie als Füllstoffe Aluminium- und/oder Zinkpulver sowie Graphit- oder Glimmerpulver oder Graphit- und Glimmerpulver neben ggf. weiteren Füllstoffen enthält und auf der Außenseite eine Metallfolie enthält.

2. Beschichtung nach Anspruch 1, **dadurch gekennzeichnet,** daß die Schicht aus lösemittelfreier Masse eine Dicke von 1-10 mm hat.

3. Beschichtung nach Anspruch 1, **dadurch gekennzeichnet,** daß die Schicht aus lösemittelfreier Masse eine Dicke von 1,5-2,5 mm hat.

4. Beschichtung nach Anspruch 1, **dadurch gekennzeichnet,** daß die lösemittelfreie Masse folgenden Aufbau hat:
| | |
|---|---|
| Bitumen | 30 bis 50 Gew.-% |
| Polymer(e) | 2 bis 22 Gew.-% |
| Wachs(e) | 0 bis 10 Gew.-% |
| Aluminium- und/oder Zinkpulver | 1 bis 8 Gew.-% |
| Graphit | 0 bis 50 Gew.-% |
| Glimmer | 0 bis 25 Gew.-% |
| weitere Füllstoffe | 0 bis 50 Gew.-% |

5. Beschichtung nach Anspruch 1, **dadurch gekennzeichnet,** daß die Metallfolie eine Kupfer- oder Aluminiumfolie ist.

6. Beschichtung nach Anspruch 1 und 5, **dadurch gekennzeichnet**, daß die Metallfolie eine Dicke von 0,1-0,3 mm hat.

7. Beschichtung nach Anspruch 1, 5 und 6, **dadurch gekennzeichnet**, daß die Metallfolie auf die Schicht aus lösemittelfreier Masse aufgeklebt ist.

8. Verfahren zur Herstellung einer Wärme und Schall reduzierenden Beschichtung für Bleche gemäß Anspruch 1, **dadurch gekennzeichnet,** daß auf das Blech eine Schicht aus einer lösemittelfreien Masse auf Basis von Bitumen, Polymeren und/oder Wachs und Füllstoffen, deren Teilchengröße nicht größer ist als 200 µm, wobei sie als Füllstoffe Aluminium-und/oder Zinkpulver sowie Graphit- oder Glimmerpulver oder Graphit- und Glimmerpulver neben ggf. weiteren Füllstoffen enthält, heiß aufgebracht wird und daß die Metallfolie auf die heiße Masse aufgebracht wird.

9. Verfahren zur Herstellung einer Wärme und Schall reduzierenden Beschichtung für Bleche gemäß Anspruch 1, **dadurch gekennzeichnet,** daß auf das Blech eine Schicht aus einer lösemittelfreien Masse auf Basis von Bitumen, Polymeren und/oder Wachs, und Füllstoffen, deren Teilchengröße nicht größer ist als 200 µm, wobei sie als Füllstoffe Aluminium-und/oder Zinkpulver sowie Graphit- oder Glimmerpulver oder Graphit- und Glimmerpulver neben ggf. weiteren Füllstoffen enthält, heiß aufgebracht wird und nach dem Abkühlen der Masse die Metallfolie mit Hilfe eines zusätzlichen Klebers auf die erstarrte Schicht aufgeklebt wird.

10. Verfahren nach den Ansprüchen 8 und 9, **dadurch gekennzeichnet,** daß die Metallfolie nur auf ausgewählte Bereiche der Schicht aus lösungsmittel freier Masse aufgebracht wird.

## Claims

1. Heat and sound reducing coating for metal sheets, characterized in that its essential constituents are: a layer of a solvent-free compound based on bitumen, polymers and/or wax and filler materials with a particle size not exceeding 200 µm, containing, as filler materials, aluminium powder and/or zinc powder together with graphite powder or mica flour or graphite powder and mica flour with other fillers if required; and an external metal foil.

2. Coating according to Claim 1, characterized in that the layer of solvent-free compound has a thickness of 1-10 mm.

3. Coating according to Claim 1, characterized in that the layer of solvent-free compound has a thickness of 1.5-2.5 mm.

4. Coating according to Claim 1, characterized in that the solvent-free compound has the following composition:
| | |
|---|---|
| Bitumen | 30 to 50 mass % |
| Polymer(s) | 2 to 22 mass % |
| Wax(es) | 0 to 10 mass % |
| Aluminium powder and/or zinc powder | 1 to 8 mass % |
| Graphite | 0 to 50 mass % |
| Mica | 0 to 25 mass % |
| Other filler materials | 0 to 50 mass %. |

5. Coating according to Claim 1, characterized in that the metal foil is a copper or aluminium foil.

6. Coating according to Claims 1 and 5, characterized in that the metal foil has a thickness of 0.1-0.3 mm.

7. Coating according to Claims 1, 5 and 6, characterized in that the metal foil is bonded to the layer of solvent-free compound.

8. Process for the manufacture of a heat and sound reducing coating for metal sheets according to Claim 1, characterized in that a layer of a solvent-free compound based on bitumen, polymers and/or wax and filler materials with a particle size not exceeding 200 µm, containing, as filler materials, aluminium powder and/or zinc powder together with graphite powder or mica flour or graphite powder and mica flour with other fillers if required, is applied hot to the metal sheet, and in that the metal foil is applied to the hot compound.

9. Process for the manufacture of a heat and sound reducing coating for metal sheets according to Claim 1, characterized in that a layer of a solvent-free compound based on bitumen, polymers and/or wax and filler materials with a particle size not exceeding 200 µm, containing, as filler materials, aluminium powder and/or zinc powder together with graphite powder or mica flour or graphite powder and mica flour with other fillers if required, is applied hot to the metal sheet, and after the compound has cooled the metal foil is bonded to the hardened layer by means of an additional adhesive.

10. Process according to Claims 8 and 9, characterized in that the metal foil is applied only to selected areas of the layer of solvent-free compound.

## Revendications

1. Revêtement pour tôles réduisant la chaleur et le bruit, caractérisé en ce qu'il contient en tant que composants principaux une couche d'une masse exempte de solvant à base de bitume, de polymères et/ou de cire et matières de charge dont la granulométrie n'est pas supérieure à 200 µm, ce revêtement contenant, en tant que matières de charge, une poudre d'aluminium et/ou de zinc, ainsi qu'une poudre de graphite ou de mica, ou une poudre de graphite et de mica en plus d'éventuelles autres matières de charge, ainsi qu'une feuille métallique sur la face extérieure.

2. Revêtement selon la revendication 1, caractérisé en ce que la couche constituée d'une masse exempte de solvant a une épaisseur de 1 à 10 mm.

3. Revêtement selon la revendication 1, caractérisé en ce que la couche constituée d'une masse exempte de solvant a une épaisseur de 1,5 à 2,5 mm.

4. Revêtement selon la revendication 1, caractérisé en ce que la masse exempte de solvant a la constitution suivante :
| | |
|---|---|
| bitume | 30 à 50 % en poids |
| Polymère(s) | 2 à 22 % en poids |
| Cire(s) | 0 à 10 % en poids |
| Poudre d'aluminium et/de zinc | 1 à 8 % en poids |
| Graphite | 0 à 50 % en poids |
| Mica | 0 à 25 % en poids |
| Autres matières de charge | 0 à 50 % en poids |

5. Revêtement selon la revendication 1, caractérisé en ce que la feuille métallique est une feuille de cuivre ou d'aluminium.

6. Revêtement selon les revendications 1 à 5, caractérisé en ce que la feuille métallique a une épaisseur de 0,1 à 0,3 mm.

7. Revêtement selon les revendications 1, 5 et 6, caractérisé en ce que la feuille métallique est collée sur la couche constituée d'une masse exempte de solvant.

8. Procédé de fabrication d'un revêtement pour tôles, réduisant la chaleur et le bruit, selon la revendication 1, caractérisé en ce qu'on applique à chaud sur la tôle une couche constituée d'une masse exempte de solvant à base de bitume, de polymère et/ou d'une cire et de matières de charge dont la granulométrie n'est pas supérieure à 200 µm, ce revêtement contenant, en tant que matières de charge, une poudre d'aluminium et/ou de zinc, ainsi qu'une poudre de graphite ou de mica, ou une poudre de graphite et de mica en plus d'éventuelles autres matières de charge, et en ce qu'on applique la feuille métallique sur la masse chaude.

9. Procédé de fabrication d'un revêtement pour tôles, réduisant la chaleur et le bruit, selon la revendication 1, caractérisé en ce qu'on applique à chaud sur la tôle une couche constituée d'une masse exempte de solvant à base de bitume, de polymères et/ou d'une cire, et de matières de charge dont la granulométrie n'est pas supérieure à 200 µm, le revêtement contenant en tant que matières de charge une poudre d'aluminium et/ou de zinc, ainsi qu'une poudre de graphite ou de mica, ou une poudre de graphite et de mica en plus d'éventuelles autres matières de charge, et en ce que, après refroidissement de la masse, on colle la feuille métallique sur la couche solidifiée, à l'aide d'un adhésif supplémentaire.

10. Procédé selon les revendications 8 et 9, caractérisé en ce que la feuille métallique n'est appliquée que sur des zones sélectionnées de la couche constituée d'une masse exempte de solvant.
